Europäisches Patentamt

European Patent Office

Office européen des brevets

(11) Publication number: **0 202 749**
**B1**

# (12) EUROPEAN PATENT SPECIFICATION

(45) Date of publication of patent specification: **07.12.88**

(21) Application number: **86302612.6**

(22) Date of filing: **09.04.86**

(51) Int. Cl.⁴: **F 16 D 35/00, F 16 D 13/72, F 01 P 1/06**

(54) **Fluid coupling device having improved heat dissipation.**

(30) Priority: **22.04.85 US 725683**

(43) Date of publication of application:
**26.11.86 Bulletin 86/48**

(45) Publication of the grant of the patent:
**07.12.88 Bulletin 88/49**

(84) Designated Contracting States:
**DE FR GB IT**

(56) References cited:
**EP-A-0 143 898**
**DE-C- 939 845**
**DE-C- 971 175**
**US-A-2 963 135**
**US-A-3 055 473**
**US-A-3 075 691**
**US-A-4 134 484**
**US-A-4 181 205**

(73) Proprietor: **EATON CORPORATION**
**Eaton Center**
**Cleveland Ohio 44114 (US)**

(72) Inventor: **Light, Gerard Marion**
**628 Lyon Lake Road**
**Marshall Michigan 49068 (US)**

(74) Representative: **Douglas, John Andrew**
**Eaton House Staines Road**
**Hounslow Middlesex TW4 5DX (GB)**

Courier Press, Leamington Spa, England.

## Description

Background of the disclosure

The present invention relates to rotary torque-transmitting coupling devices, and more particularly to such devices wherein heat is generated as a result of the torque transmission, and the ability to dissipate such heat represents a limiting factor on the torque-transmitting capability of the device.

Although the present invention may be used with various types and configurations of rotary torque-transmitting coupling devices, it is especially adapted for use with rotary fluid coupling devices, and will be described in connection therewith.

Rotary fluid coupling devices of the type which may benefit from the use of the present invention have found many uses, one of the most common of which is to drive the cooling fan associated with the radiator of vehicle engines. Such coupling devices are frequently referred to as "viscous fan drives" because such couplings utilize a high-viscosity fluid to transmit torque, by means of a viscous shear drag, from an input coupling member (clutch) to an output coupling member (housing) to which is bolted the cooling fan.

More specifically, this invention is especially advantageous when used on a relatively high torque viscous fan drive, i.e., a fan drive which is capable of transmitting to the cooling fan in the range of about 2 horsepower to about 12 horsepower. Typically, such high torque or high horsepower fan drives include an output coupling assembly comprising a cast aluminum housing and a die cast aluminum cover. The input coupling member and the die cast cover normally define a plurality of interdigitated lands and grooves which define the shear space. When this shear space is filled with viscous fluid, torque is transmitted from the input coupling member to the output coupling assembly, in response to rotation of the input coupling.

During torque transmission, substantial heat is generated as a result of the shearing of the viscous fluid between the interdigitated lands and grooves. The amount of heat generated is proportional to the "slip" speed of the fan drive, i.e., the difference between the speed of the input coupling and the speed of the output coupling. It is generally well understood by those skilled in the art that, for many rotary torque-transmitting coupling devices, and especially for viscous fan drives, the ability to transmit torque is limited by the ability of the device to dissipate the heat generated as a result of torque transmission. For example, in a viscous fan drive, if the temperature of the viscous fluid exceeds a certain maximum temperature, the result will be a deterioration in the viscous properties of the viscous fluid, resulting in a loss of torque-transmitting capability of the fluid.

In viscous fan drives of the type described above in which a cast cover forms part of the shear space, the cast cover is also the primary heat dissipating element of the device. Therefore, it has been conventional practice in the viscous fan drive art to have a plurality of cooling fins cast integrally with the cover. It is now becoming recognized by those skilled in the art that the majority of the heat is dissipated by fins which are located axially adjacent the viscous shear area of the coupling device. It has also been generally accepted by those skilled in the art that heat dissipation is generally proportional to the total length of cooling fins located in the primary heat dissipation region.

As may be seen by reference to U.S. Patent Nos. 2,963,135 and 3,075,691, it has been conventional practice since the very early days of the viscous fan drive industry to have the cooling fins oriented radially, primarily to facilitate the radially outward flow of air which carries away the heat transmitted from the shear space to the cooling fins. As may be seen from the above-referenced patents, it also has been conventional practice to alternate longer and shorter radial fins in an attempt to increase the total length of cooling fins, without having the fins disposed too close together. As may be seen by reference to U.S. Patent No. 4,134,484, it is still common practice, after all these years, to utilize the same basic cooling fin pattern.

As the torque-transmission requirements of viscous fan drives have increased over the years, thus increasing the need to dissipate heat, the primary solution attempted by those skilled in the art has been to increase the total number of cooling fins, resulting in adjacent fins being closer together. This is a generally undesirable solution because the die required to cast such a cover becomes much more expensive, requires more maintenance, and has a shorter die life. Therefore, it is generally recognized that it is undesirable to have adjacent cooling fins closer together than some predetermined, minimum distance of separation.

Given the need for greater heat dissipation, and the recognized limitations on increasing the number of cooling fins as discussed above, those skilled in the art have even attempted to add additional structure to increase the flow of air over the cooling fins. U.S. Patent No. 4,181,205 discloses a viscous fan drive including an arrangement of fan blades located adjacent the front of the fan drive cover, in an attempt to increase the amount of heat dissipated from the cooling fins by increasing the flow of air over the cooling fins. Such an arrangement, although possibly effective, would add substantially to the size, weight, complexity, and cost of the fan drive and would in addition usurp a portion of the fan drive output horsepower, simply to drive the fan blade arrangement.

Summary of the invention

Accordingly, it is an object of the present invention to provide an improved rotary torque-transmitting coupling device of the type having cooling fins which are generally radially oriented to facilitate radial airflow, wherein the total fin length is increased to increase heat dissipation.

It is another object of the present invention to provide a coupling device which is capable of achieving the above-stated objects and wherein the element equipped with the cooling fins is a die casting, made in accordance with good die casting practices.

The above and other objects of the invention are accomplished by the provision of an improved rotary coupling device of the type including a first rotatable coupling assembly comprising a housing member and a cover member cooperating to define a coupling chamber therebetween. A second rotatable coupling member is disposed in the coupling chamber and is rotatable relative to the first rotatable coupling assembly. The forward surface of the second coupling member and an adjacent surface of the cover member cooperate to define a torque-transmitting region therebetween. A control means is operable to control the amount of torque transmission between the first rotatable coupling assembly and the second rotatable coupling member in response to variations in a predetermined condition. The rotary coupling device is of the type in which the torque-transmitting capability of the coupling device is limited at least in part by the ability of the coupling device to dissipate heat which is generated as a result of the torque transmission. The cover member includes a plurality of cooling fins disposed on the forward surface of the cover member, the cooling fins being operable to dissipate heat transmitted from the torque-transmitting region by the cover member.

The improved coupling device is characterized by the plurality of cooling fins being arranged in a plurality of groups of cooling fins. Each of the groups of cooling fins comprises one cooling fin oriented generally radially, and the remainder of the cooling fins in each group being oriented generally parallel to the one radially-oriented cooling fin, over at least a major portion of the length thereof. This cooling fin pattern increases substantially the total possible fin length within a given finned area, and increases the resulting heat dissipation.

In accordance with another aspect of the present invention, and in accordance with good casting practices, each of the cooling fins within each group is separated from each adjacent cooling fin within the same group by a predetermined, minimum distance.

Brief description of the drawings

Figure 1 is an axial cross-section of a typical fluid coupling device of the type with which the present invention may be utilized.

Figure 2 is a fragmentary front plan view, of the fluid coupling device of Figure 1, showing only the cast cover member, wherein the cast cover member in made in accordance with the prior art.

Figure 3 is a front plan view, of the fluid coupling device of Figure 1, showing only the cast cover member, wherein the cast cover member is made in accordance with the present invention.

Figure 4 is an enlarged, somewhat schematic view, similar to Figure 2, illustrating a segment of the prior art cooling fins.

Figure 5 is an enlarged, somewhat schematic view, similar to Figure 3, illustrating a segment of the cooling fins made in accordance with the present invention.

Description of the preferred embodiment

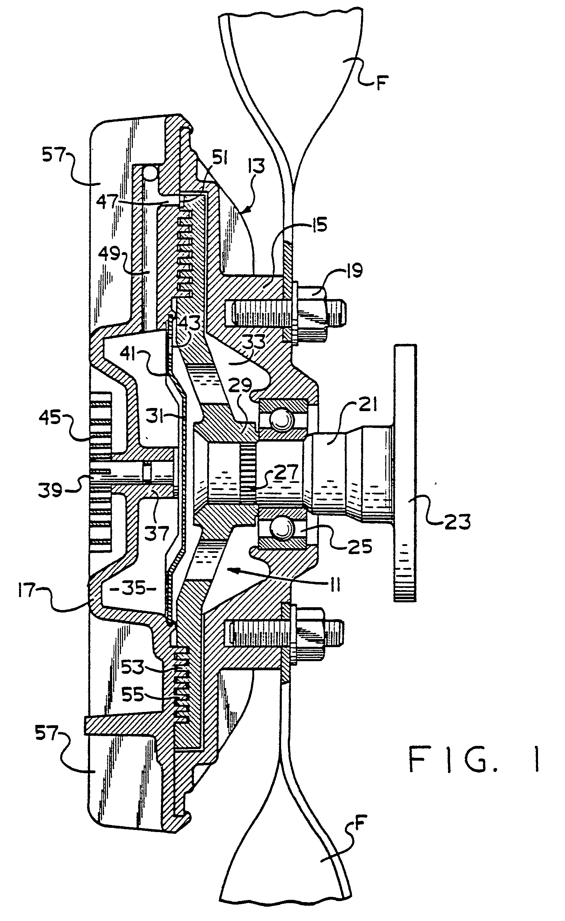

Referring now to the drawings, which are not intended to limit the invention, Figure 1 illustrates one preferred form of a fluid coupling device (viscous fan drive) of the type with which the present invention may be utilized. The fluid coupling device illustrated in Figure 1 includes an input coupling member, generally designated 11, and an output coupling assembly, generally designated 13. The output coupling assembly 13 includes a die cast housing member 15 and a die cast cover member 17, the members 15 and 17 being secured together by a roll-over of the outer periphery of the cover member 17, as is well known in the art. The fluid coupling device is adapted to be driven by a liquid cooled engine and, in turn, drives a radiator cooling fan F. The fan F may be bolted to the housing member 15 by means of a plurality of nuts 19. It will be understood, however, that the use of the present invention is not limited to any particular configuration of fluid coupling device or any particular application thereof, except as specifically noted hereinafter.

The fluid coupling device includes an input shaft 21 on which the input coupling member 11 is mounted. The input shaft 21 is rotatably driven, typically by means of a flange 23 which may be bolted to the mating flange of an engine water pump. The input shaft 21 functions as a support for the inner race of a bearing set 25, which is seated on the inside diameter of the housing member 15. The forward end (left end in Figure 1) of the input shaft 21 has an interference fit between a serrated portion 27 and an opening defined by a hub portion 29 of the input coupling member 11. As a result, rotation of the input shaft 21 causes rotation of the input coupling member 11.

The housing member 15 and the cover member 17 cooperate to define a fluid chamber which is separated, by means of a circular valve plate 31, into a fluid operating chamber 33 and a fluid reservoir chamber 35. Thus, it may be seen that the input coupling member 11 is disposed within the fluid operating chamber 33.

The cover member 17 defines a generally cylindrical shaft support portion 37, and rotatably disposed within the portion 37 is a valve shaft 39 extending outwardly (to the left in Figure 1) through the cover member 17. Attached to the inner end (right end in Figure 1) of the valve shaft 39 is a valve arm 41, the general construction of which forms no part of the present invention, but which may be better understood by reference to U.S. Patent No. 3,055,473, assigned to the assignee of the present invention and incorporated herein by reference. Movement of the valve arm 41 controls the flow of fluid from the reservoir chamber 35 to the operating chamber 33, through a fill opening 43 formed in the valve plate 31.

Operatively associated with the outer end of the valve shaft 39 is a temperature-responsive bimetal coil 45. The manner in which the bimetal coil 45 operates to control the movement of the valve arm 41, in response to variations in a predetermined temperature condition, is well known in the art, is not an essential feature of the present invention, and will not be described further herein.

The cover member 17 defines an axial passage 47 in communication with the fluid operating chamber 33, and a radial passage 49 which provides fluid communication from the axial passage 47 to the fluid reservoir chamber 35. Disposed adjacent the axial passage 47 is a pumping element (wiper) 51, operable to engage the relatively rotating fluid in the operating chamber 33 to generate a localized region of relatively higher fluid pressure, and continually pump a small quantity of fluid back into the reservoir chamber 35, through the passages 47 and 49, as is well known in the art.

In the subject embodiment of the invention, the input coupling member 11 includes a forward surface which defines a plurality of annular lands 53. The adjacent surface of the housing member 17 forms a plurality of annular lands 55. The annular lands 53 and 55 are interdigitated to define a serpentine-shaped viscous shear space therebetween. It is believed that in view of above-incorporated US—A—3,055,473, those skilled in the art can fully understand the construction and operation of the fluid coupling device illustrated in Figure 1, as well as the various flow paths for the viscous fluid contained therein. As noted in the background portion of the specification, when torque is transmitted from the vehicle engine by means of the input shaft 21 to the input coupling member 11, the result is a shearing of the viscous fluid contained in the shear space between the annular lands 53 and 55. This shearing of the viscous fluid results in the generation of a substantial amount of heat which must be dissipated primarily by the cover member 17.

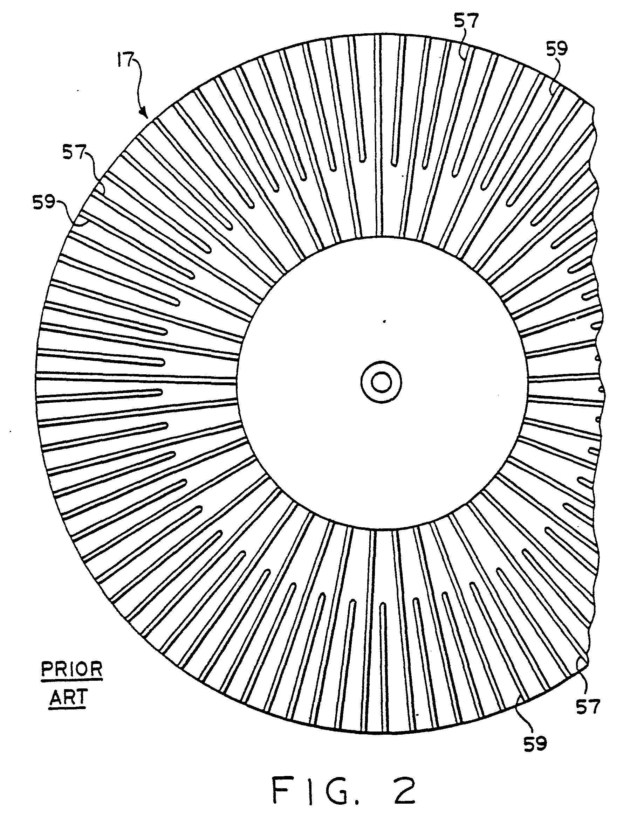

Referring now to Figure 2, in conjunction with Figure 1, it may be seen that the prior art version of the cover member 17 included a plurality of relatively longer radial cooling fins 57, and disposed between each pair of adjacent fins 57, a relatively shorter radial cooling fin 59. It may also be seen in Figure 2 that, in order to get sufficient total fin length, and sufficient heat dissipation, it became necessary to increase the total number of fins, such that the distance of separation between adjacent fins is much less than a predetermined, minimum distance necessary to comply with good die casting practices. In the prior art radial fin pattern illustrated in Figure 2, the distance of separation between adjacent relatively longer cooling fins 57, at the radially inner periphery thereof, is generally acceptable. However, the distance of separation between the radially inner end of each of the relatively shorter cooling fins 59 and the two adjacent longer cooling fins 57 is substantially less than is desirable.

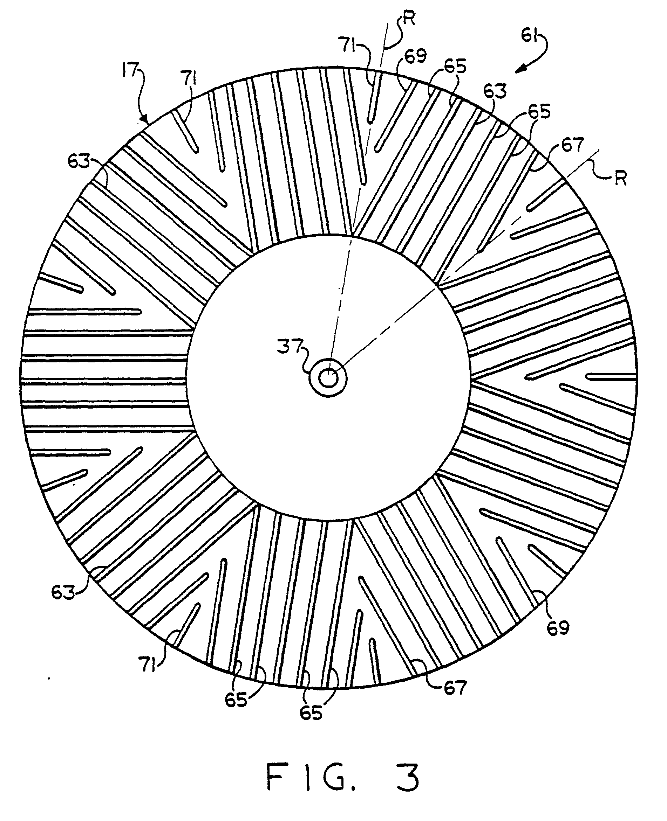

Referring now to Figure 3, the pattern of cooling fins in accordance with the present invention will be described. Figure 3 illustrates a front plan view of the die cast cover member 17, and it will be noted by comparing Figure 3 to Figure 2 that the cover member 17 utilizing the present invention is smaller in diameter than the prior art cover member 17, for reasons which will be explained subsequently. Referring again to Figure 3, it may be seen that the entire finned area of the cover member 17 is divided into a plurality of substantially identical regions 61, each of the regions 61 being bordered by an adjacent pair of radially-extending lines R. In the subject embodiment, the cover member 17 is divided into nine of the regions 61, and therefore, each adjacent pair of radially-extending lines R define therebetween an acute angle of 40 degrees. It will be understood by those skilled in the art from a reading an understanding of this specification that, within the scope of the present invention, the number of regions 61, and therefore the angle defined between adjacent radially-extending lines R, could be somewhat greater or less than nine.

Because each of the regions 61 is substantially identical, only one such region 61 will be described hereinafter, it being understood that each of the others is the same. Within each of the regions 61 there is one generally radically-extending cooling fin 63 which, in the subject embodiment, is illustrated as being centrally-disposed within the region 61, although that is not an essential feature of the present invention. On either side of the radially-extending cooling fin 63 is a pair of full-length, parallel cooling fins 65. By "parallel" is meant that each of the cooling fins 65 is substantially parallel to the radially-extending cooling fin 63. In addition, each region 61 includes a somewhat shorter cooling fin 67 which is oriented substantially parallel to the adjacent cooling fin 65, and an even shorter cooling fin 69 which is oriented substantially parallel to its adjacent cooling fin 65. Finally, each region 61 includes one very short cooling fin 71, the orientation of which is not critical, but which is shown in Figure 3 as being generally radially oriented. Each of the cooling fins 71 is included primarily to divide the space between the adjacent fins 67 and 69. Therefore, it should be understood that when reference is made herein, and in the claims of this application, to "the remainder of said cooling fins in each group (region 61) being oriented generally parallel" to the radially-extending cooling fins 65, the very short cooling fins 71 are not generally included within that statement.

The parallel arrangement of the cooling fins 63, 65, 67, and 69, as shown in Figure 3, is a very important aspect of the present invention because it permits nearly the maximum, possible fin length to be located in each of the regions 61 without having the distance of separation of adjacent fins less than the predetermined, minimum distance. The one exception to the above statement which may be seen in Figure 3 is that the parallel cooling fins 65 toward the "end" of each region 61 cooperate with the parallel cooling fin 65 located toward the near end of the adjacent region 61 to form a "V". Referring again briefly to Figure 2, it may be seen that with the prior art arrangement of cooling fins, it would be impossible to die cast the cover member 17 with any of the adjacent relatively longer cooling fins 56 forming a "V" because the included angle therebetween would be only about 7 or 8 degrees. However, it is one aspect of the present invention that, because of the provision of a plurality of regions of generally parallel cooling fins, it is possible to permit cooling fins from adjacent regions to form a "V" as shown in Figure 3 because, with the present invention, the included angle therebetween is relatively large, and does not interfere with good die casting practices. In the subject embodiment, with nine of the regions 61, each representing a 40-degree segment of the entire cover member 17, the included angle between each pair of cooling fins 65 which form a "V" is likewise 40 degrees.

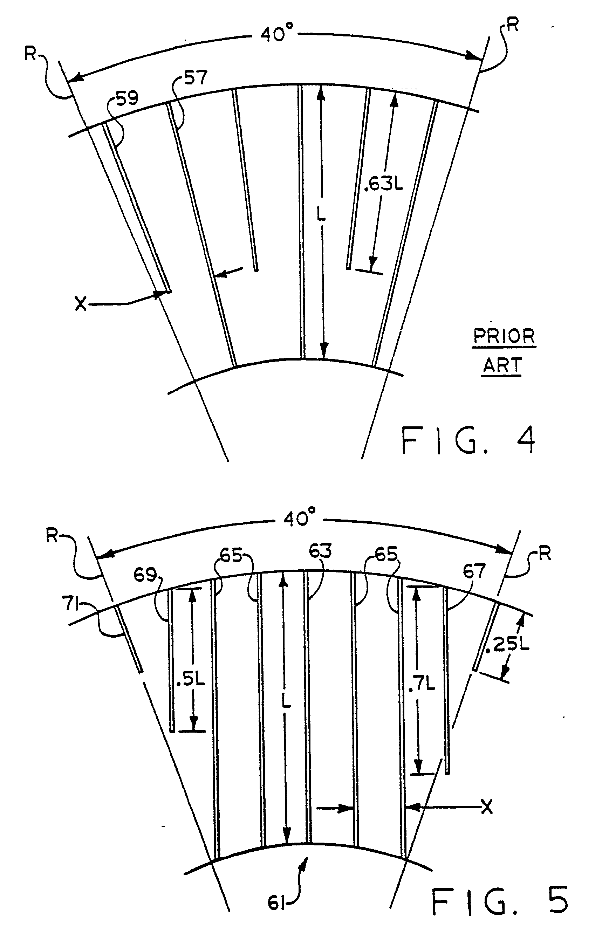

Referring now to Figures 4 and 5, which are schematic representations of the cooling fin patterns of the prior art and of the invention, a comparison will be made to illustrate schematically that the present invention results in substantially greater total cooling fin length within a given finned area, i.e., within each of the regions 61. In making the comparison of the prior art and the invention, instead of having the cooling fins 57 and 59 of the prior art spaced very close together as shown in Figure 2, it is the intent of Figures 4 and 5 to show that the invention provides greater total fin length than the prior art, if both the invention and the prior art comply with the requirement that each cooling fin be separated from each adjacent cooling fin within the same group (or region 61) by a predetermined, minimum distance.

Accordingly, it may be seen that in the prior art arrangement of Figure 4, the cooling fins 57 and 59 have been arranged such that the radially inner end of each of the shorter cooling fins 57 is separated (circumferentially) from each adjacent relatively longer cooling fin 57 by a predetermined, minimum distance X. Similarly, in Figure 5, the distance of separation of each of the cooling fins (63, 65, 67, 69, or 71) from each adjacent cooling fin (with the exception of the previously-described "V" arrangement) is the same predetermined, minimum distance X.

Referring still to Figures 4 and 5, it may be seen in Figure 4 that each of the relatively longer cooling fins 57 has a length L, while each of the relatively shorter cooling fins 59 has a length .63 L. Therefore, within each 40-degree segment or region of the prior art cooling fin pattern, there are three of the relatively longer cooling fins 57 and three of the relatively shorter cooling fins 59, and the total cooling fin length T (prior art) in the region is:

$$T \text{ (prior art)} = 3(L) + 3 \text{ (.63 L)};$$

and

$$T(\text{prior art}) = 4.89 \text{ L}.$$

Turning now to the invention of Figure 5, each of the radially-extending cooling fins 63, and each of the full-length, parallel cooling fins 65 also have a length L. Each of the somewhat shorter cooling fins 67 has a length .7 L, and each of shorter cooling fins 69 has a length .5 L. Finally, each of the very short cooling fins 71 has a length .25 L. Therefore, the total cooling fin length T (INV.) is:

$$T(\text{INV.}) = 5 \text{ (L)} + .69 \text{ L} + .5 \text{ L} + .25 \text{ L};$$

and

$$T \text{ (INV.)} = 6.44 \text{ L}.$$

By comparing the above results from Figures 4 and 5, it may be seen that the invention provides approximately 30 percent greater total cooling fin length than does the prior art radial cooling fin arrangement. Thus, the present invention makes it possible to provide substantially greater total cooling fin length than the prior art, if the same distance of separation (X) between adjacent cooling fins is utilized, or alternatively, to provide approximately the same total cooling fin length (and heat dissipation) while providing greater distance of separation between adjacent cooling fins. As was described in the background of the specification, this latter option results in a die which is less expensive, requires less maintenance, and will have a longer useful life.

As another option when utilizing the present invention, the size of the cover member 17 may be reduced. As was noted in connection with Figures 2 and 3, the cover member 17 made in accordance with the invention in Figure 3 has a smaller diameter than the prior art cover member shown in Figure 2. As can now be understood by those skilled in the art, because the present invention results in greater total fin length for a given finned area, it is also possible by using the invention to reduce the size of the finned area. Therefore, Figure 3 represents an embodiment of the present invention in which the total fin length is actually more than in the prior art shown in Figure 2 but the overall diameter of the cover member 17 has been reduced substantially, and the distance of separation between adjacent fins has been increased, to obtain the die casting benefits described previously. Thus, the use of the present invention provides the following options:

(1) increase the total fin length and heat dissipation capability of the cover;

(2) keep the total fin length and heat dissipation the same, but reduce the size, weight, and cost of the cover member;

(3) keep the total fin length and heat dissipation the same, but increase the distance of separation between adjacent fins for better casting practices; or

(4) any combination of one or more of the above.

The invention has been described in great detail sufficient to enable one skilled in the art to make and use the same. It is believed that upon a reading and understanding of the following specification, various alterations and modifications will become apparent to those skilled in the art. For example, it should be apparent that it would be possible to have a different number of the parallel cooling fins 65 than is shown in Figures 3 and 5, or to have a somewhat different arrangement of the shorter cooling fins 67 and 69. It is intended that the present invention includes all such alterations and modifications insofar as they come within the scope of the appended claims.

**Claims**

1. A rotary coupling device of the type including a first rotatable coupling assembly (13) comprising a housing member (15) and a cover member (17) cooperating to define a coupling chamber therebetween, a second rotatable coupling member (11) disposed in said coupling chamber and being rotatable relative to said first rotatable coupling assembly, the forward surface (53) of said second coupling member and an adjacent surface (55) of said cover member cooperating to define a torque-transmitting region therebetween, control means (31, 39, 41, 43, 45) operable to control the amount of torque transmission between said first rotatable coupling assembly and said second rotatable coupling member in response to variations in a predetermined condition, said rotary coupling device being of the type in which the torque-transmitting capability of said coupling device is limited at least in part by the ability of said torque transmission, said cover member including a plurality of cooling fins (63—71) disposed on the forward surface of said cover member and being operable to dissipate heat transmitted from said torque-transmitting region by said cover member, said plurality of cooling fins being arranged in a plurality of groups of cooling fins; characterized by:

said plurality of cooling fins being arranged in a plurality of groups of cooling fins; characterized by:

each of said groups of said cooling fins comprising one cooling fin (63) oriented generally radially, the remainder (65, 67, 69) of said cooling fins in each group being oriented generally parallel to said one radially-oriented cooling fin, over at least a major portion of the length thereof, thereby to increase substantially the total possible fin length within a given finned area, and the resulting heat dissipation.

2. A rotary coupling device as claimed in claim 1 characterized by said remainder of said cooling fins in each group which are parallel to said one radially-oriented cooling fin comprising a plurality of cooling fins (65) having substantially the same radial length as said one radially-oriented cooling fin.

3. A rotary coupling device as claimed in claim 2 characterized by said remainder of said cooling fins in each group which are parallel to said one radially-oriented cooling fin further comprising a plurality of radially shorter (67, 69) cooling fins.

4. A rotary coupling device as claimed in claim 3 characterized by said cover member including an additional short cooling fin (71) disposed between adjacent pairs of said groups of said cooling fins, each of said additional, short cooling fins (71) being disposed in non-parallel relationship with the adjacent cooling fin in each of said adjacent groups of said cooling fins.

5. A rotary coupling device as claimed in claim 1 characterized by said torque-transmitting region comprising a viscous shear space.

6. A rotary coupling device as claimed in claim 5 characterized by said forward surface of said second coupling member defining a plurality of annular lands (53), said adjacent surface of said cover member defining a plurality of annular lands (55), said annular lands (53) and said annular lands (55) being interdigitated to define said viscous shear space therebetween.

7. A rotary coupling device as claimed in claim 5 characterized by said control means comprising valve means (31, 41, 43) operable to control the quantity of fluid in said viscous shear space in response to variations in said predetermined condition.

8. A rotary coupling device as claimed in claim 7 characterized by said control means including temperature-responsive means (39, 45) operable to control said valve means in response to variations in a predetermined temperature condition.

**Patentansprüche**

1. Drehkupplungsvorrichtung der Bauart mit einer ersten drehbaren Kupplungsanordnung (13), die ein Gehäuseglied (15) und ein damit zusammenarbeitendes Abdeckglied (17) zur Definition einer Kupplungskammer dazwischen aufweist, mit einem zweiten drehbaren Kupplungsglied (11) angeordnet in der Kupplungskammer und drehbar bezüglich der ersten drehbaren Kupplungsanordnung, wobei die Vorderseite (53) des zweiten Kupplungsglieds und die benachbarte Oberfläche (55) des Abdeckglieds zur Definition einer dazwischen gelegenen Drehmomentübertragungszone zusammenarbeiten, mit Steuermitteln (31, 39, 41, 43, 45) betätigbar zur Steuerung der Größe der Drehmomentübertragung zwischen der ersten drehbaren Kupplungsanordnung und dem zweiten drehbaren Kupplungsglied infolge von Änderungen in einem vorbestimmten Zustand, wobei die Drehkupplungsvorrichtung zu der Bauart gehört, bei der die Drehmomentübertragungsfähigkeit der Kupplungsvorrichtung mindestens zum Teil durch die Fähigkeit der Drehmomentübertragung begrenzt ist, und wobei das Abdeckglied eine Vielzahl von Kühlrippen (63, 71) angeordnet an der Vorderseite des Abdeckglieds aufweist um von der Drehmomentübertragungszone übertragene Wärme durch das Abdeckglied zu verteilen gekennzeichnet durch

a) die Vielzahl der Kühlrippen ist in einer Vielzahl von Gruppen von Kühlrippen innerhalb identischer Zonen (61) angeordnet, und

b) jede der Gruppen der Kühlrippen weist eine Kühlrippe (63) auf, die im ganzen radial orientiert ist, während der Rest (65, 67, 69) der Kühlrippen in jeder Gruppe im ganzen parallel zu der einen radial orientierten Kühlrippe sich erstreckt, und zwar über mindestens einen Hauptteil der Länge derselben, wodurch die gesamte mögliche Rippenlänge innerhalb eines gegebenen mit Rippen versehenen Gebiets und die sich ergebende Wärmeverteilung wesentlich erhöht wird.

2. Drehkupplungsvorrichtung nach Anspruch 1, dadurch gekennzeichnet, daß der Rest der Kühlrippen in jeder Gruppe, die parallel zu der erwähnten einen radial orientierten Kühlrippe verlaufen eine Vielzahl von Kühlrippen (65) sind, und zwar mit im wesentlichen der gleichen Radiallänge wie die erwähnte eine radial orientierte Kühlrippe.

3. Drehkupplungsvorrichtung nach Anspruch 2, dadurch gekennzeichnet, daß der Rest der Kühlrippen in jeder Gruppe, die parallel zu der einen radial orientierten Kühlrippe verlaufen, ferner eine Vielzahl von radial kürzeren (67, 69) Kühlrippen aufweisen.

4. Kupplungsvorrichtung nach Anspruch 3, dadurch gekennzeichnet, daß das Abdeckglied eine zusätzliche kurze Kühlrippe (71) aufweist, und zwar angeordnet zwischen benachbarten Paaren der erwähnten Gruppen von Kühlrippen, wobei jede der erwähnten zusätzlichen kurzen Kühlrippen (71) in einer nicht parallelen Beziehung mit der benachbarten Kühlrippe in jeder der benachbarten Gruppen von Kühlrippen angeordnet sind.

5. Drehkupplungsvorrichtung nach Anspruch 1, dadurch gekennzeichnet, daß die Drehmomentübertragungszone einen Viskosenscherraum aufweist.

6. Drehkupplungsvorrichtung nach Anspruch 5, dadurch gekennzeichnet, daß die Vorderseite des zweiten Kupplungsgliedes eine Vielzahl von Ringstegen (53) bildet, wobei die benachbarte Oberfläche des Abdeckglieds eine Vielzahl von Ringstegen (55) definiert, und wobei die Ringstege (53) und die Ringstege (55) zur Bildung des Viskosenscherraumes dazwischen ineinandergreifen.

7. Drehkupplungsvorrichtung nach Anspruch 5, dadurch gekennzeichnet, daß die Steuermittel Ventilmittel (31, 42, 43) aufweisen, und zwar betätigbar zur Steuerung der Strömungsmittelmenge in dem Viskosescherraum infolge von Veränderungen in dem vorbestimmten Zustand.

8. Drehkupplungsvorrichtung nach Anspruch 7, dadurch gekennzeichnet, daß die Steuermittel auf Temperatur ansprechende Mittel (39, 45) aufweisen, und zwar betätigbar zur Steuerung der Ventilmittel infolge von Veränderungen in einem vorbestimmten Temperaturzustand.

## Revendications

1. Dispositif d'accouplement rotatif du type comprenant un premier ensemble d'accouplement tournant (13) qui comprend un élément formant carter (15) et en élément formant couvercle (17) qui coopèrent pour définir entre eux une chambre d'accouplement, un deuxième élément d'accouplement tournant (11) disposé dans ladite chambre d'accouplement et qui peut tourner par rapport audit premier ensemble d'accouplement tournant, la surface avant (53) dudit deuxième élément d'accouplement et une surface adjacente (55) dudit élément couvercle coopérant pour définir entre elles une région de transmission du couple, des moyens de commande (31, 39, 41, 43, 45) que l'on peut mettre en action pour commander le degré de transmission du couple entre ledit premier ensemble d'accouplement tournant et ledit deuxième élément d'accouplement tournant en réponse à des variations d'une condition prédéterminée, ledit dispositif d'accouplement rotatif étant du type dans lequel la capacité de transmission du couple dudit dispositif d'accouplement est limitée, au moins en partie, par l'aptitude du dispositif à dissiper la chaleur dégagée par suite de la transmission du couple, ledit élément formant couvercle comprenant une pluralité d'ailettes de refroidissement (63—71) disposées sur la surface avant dudit élément formant couvercle et qui sont capables de dissiper la chaleur transmise en provenance de ladite région de transmission du couple par ledit élément formant couvercle; caractérisé en ce que:

a) ladite pluralité d'ailettes de refroidissement sont agencées en une pluralité de groupes d'ailettes de refroidissement contenus dans des régions identiques (61); et

b) chacun des groupes desdites ailettes de refroidissement comprend une ailette de refroidissement (63) orientée à peu près radialement, les autres (65, 67, 69) ailettes de refroidissement contenues dans chaque groupe étant orientées à peu près parallèlement à ladite première ailette de refroidissement orientée radialement, au moins sur la majeure partie de leur longueur, pour accroître ainsi notablement la longueur totale possible des ailettes dans une région ailetée donnée et accroître la dissipation résultante de la chaleur.

2. Dispositif d'accouplement rotatif selon la revendication 1, caractérisé en ce que lesdites autres ailettes de refroidissement de chaque groupe, qui sont parallèles à ladite première ailette de refroidissement orientée radialement comprennent une pluralité d'ailettes de refroidissement (65) qui ont sensiblement la même longueur radiale que ladite ailette de refroidissement orientée radialement.

3. Dispositif d'accouplement rotatif selon la revendication 2, caractérisé en ce que lesdites autres ailettes de refroidissement contenues dans chaque groupe qui sont parallèles à ladite première ailette de refroidissement orientée radialement comprennent en outre une pluralité d'ailettes de refroidissement radiales plus courtes (67, 69).

4. Dispositif d'accouplement rotatif selon la revendication 3, caractérisé en ce que ledit élément formant couvercle comprend une ailette courte additionnelle (71) disposée entre deux groupes adjacents desdites ailettes de refroidissement, chacune desdites ailettes de refroidissement courtes additionnelles (71) étant disposée non parallèlement à l'ailette de refroidissement adjacente de chacun desdits groupes adjacents desdites ailettes de refroidissement.

5. Dispositif d'accouplement rotatif selon la revendication 1, caractérisé en ce que ladite région de transmission du couple est constituée par un espace de cisaillement visqueux.

6. Dispositif d'accouplement rotatif selon la revendication 5, caractérisé en ce que ladite surface avant dudit deuxième élément d'accouplement définit une pluralité de nervures annulaires (53), ladite surface adjacente dudit élément formant couvercle définissant une pluralité de nervures annulaires (55), lesdites nervures annulaires (53) et lesdites nervures annulaires (55) étant imbriquées les unes entre les autres pour définir entre elles ledit espace de cisaillement visqueux.

7. Dispositif d'accouplement rotatif selon la revendication 5, caractérisé en ce que lesdits moyens de commande comprennent des moyens formant valve (31, 41, 43) capables de commander la quantité de fluide contenue dans ledit espace de cisaillement visqueux en réponse à des variations de ladite condition prédéterminée.

8. Dispositif d'accouplement rotatif selon la revendication 7, caractérisé en ce que lesdits moyens de commande comprennent des moyens sensibles à la température (39, 45) capables de commander lesdits moyens formant valve en réponse à des variations d'une condition de température prédéterminée.

F I G. 1

PRIOR
ART

FIG. 2

FIG. 3

PRIOR
ART

FIG. 4

FIG. 5

4